# EUROPÄISCHE PATENTSCHRIFT

(11) **EP 2 349 762 B1**
(45) Veröffentlichungstag und Bekanntmachung des Hinweises auf die Patenterteilung: **06.11.2013**
(21) Anmeldenummer: 09764698.8
(22) Anmeldetag: 14.09.2009
(51) Int. Cl.: B60J 7/12, F15B 20/00, F15B 11/00

(54) **HYDRAULISCHE BETÄTIGUNGSVORRICHTUNG FÜR EINE VERDECKEINHEIT EINES FAHRZEUGS**
HYDRAULIC ACTUATING DEVICE FOR A CONVERTIBLE TOP OF A VEHICLE
DISPOSITIF D'ACTIONNEMENT HYDRAULIQUE POUR UNE CAPOTE DE VÉHICULE

(30) Priorität: 19.09.2008 DE 102008048092
(43) Veröffentlichungstag der Anmeldung: 03.08.2011
(73) Patentinhaber: Valmet Automotive Oy, 23500 Uusikaupunki (FI)
(72) Erfinder: KATHAN, Mark, 86875 Waal (DE); KRAUS, Reinhold, 87700 Memmingen (DE)
(74) Vertreter: Kronthaler, Wolfgang N.K.
(86) Internationale Anmeldenummer: PCT/DE2009/001296
(87) Internationale Veröffentlichungsnummer: WO 2010/031389

(56) Entgegenhaltungen:
- EP-A2- 1 404 976
- DE-A1- 3 901 641
- DE-A1-102006 060 882

## Beschreibung

Die Erfindung betrifft eine hydraulische Betätigungsvorrichtung für eine Verdeckeinheit eines Fahrzeugs mit mehreren hydraulisch beweglichen Verdeckelementen nach der im Oberbegriff des Patentanspruches 1 näher definierten Art.

Aus der EP 1 046 533 B1 ist eine hydraulische Bedienungseinrichtung für ein zwischen einem geschlossenen Zustand und einem geöffneten Zustand bewegliches Klapp-Verdeck eines Fahrzeugs mit mehreren hydraulisch beweglichen Teilen bekannt, wobei die Bedienungseinrichtung einen ersten Aktuator sowie einen oder mehrere weitere hydraulische Aktuatoren umfasst, die jeweils zum Bewegen eines Teils der Verdeckeinheit dienen.

Der erste Aktuator ist ein doppeltwirkender Aktuator mit einer hin- und herverschieblichen Kolbenstange, welche eine erste mit hydraulischer Flüssigkeit beaufschlagbare Arbeitskammer von einer zweiten Arbeitskammer trennt. Zu dem ersten Aktuator gehört weiter ein betätigbares Zweipositionenventil, das in einem ersten Stand einen ersten Anschluss des ersten Aktuators mit einem Hydraulikbehälter verbindet und in einem zweiten Stand diesen ersten Anschluss mit einem Ausströmanschluss einer Pumpe verbindet. Weiter sind ein zweites und eventuell ein oder mehrere weitere betätigbare Zweipositionenventile vorgesehen, das/die zu einem oder mehreren weiteren Aktuatoren gehört bzw. gehören, wobei das zweite und etwaige weitere Zweipositionenventil jeweils einen Ausgangsanschluss aufweist, der mit einem oder mehreren der weiteren Aktuatoren verbunden ist und in einem ersten Stand des betreffenden Ventils mit dem Behälter und in einem zweiten Stand mit dem Ausströmanschluss der Pumpe verbunden ist.

Die Bedienungseinrichtung ist mit Notbedienungsmitteln versehen, so dass einer oder mehrere der Aktuatoren eine manuelle Verlagerung eines oder mehrerer Teile der Verdeckeinheit gestatten, wobei die Notbedienungsmittel ein ODER-Ventil umfassen, das einen ersten und einen zweiten Eingangsanschluss sowie einen einzelnen Ausgangsanschluss aufweist und einen der beiden Eingangsanschlüsse mit dem Ausgangsanschluss verbinden kann. Dabei ist der Ausgangsanschluss des ODER-Ventils mit dem ersten Anschluss eines weiteren Aktuators verbunden, während der erste Eingangsanschluss und der zweite Eingangsanschluss des ODER-Ventils jeweils mit dem Ausgangsanschluss unterschiedlicher betätigbarer Zweipositionenventile verbunden sind.

Eine alternative Ausgestaltung einer hydraulischen Betätigungsvorrichtung für eine Verdeckeinheit eines Fahrzeugs mit einer Notbetätigungsfunktion ist in der EP 1 404 976 B1 offenbart. Bei dieser bekannten Betätigungsvorrichtung ist eine Pumpe über Hydraulikleitungen mit den Arbeitsräumen zumindest zweier doppeltwirkender Kolben-Zylinder-Anordnungen verbunden, von denen jede mit einem entsperrbaren Rückschlagventil versehen ist. Die Kolben-Zylinder-Anordnungen sind mit einem Druckentspannungsraum über ein hydraulisch sperrbares Notventil verbunden, welches über jeweils eine Steuerleitung mit jeder der Hydraulikleitungen unmittelbar nach der Pumpe verbunden ist und über eine dritte Steuerleitung angesteuert ist, welche von einer weiteren Stelle zwischen Pumpe und zumindest einer der Kolben-Zylinder-Anordnungen abzweigt. Die Steuerleitungen sind dabei mit dem automatischen Notventil derart verbunden, dass für das Sperren des Notventils eine ODER-Schaltung realisiert ist.

Diese aus der EP 1 404 976 B1 bekannte Ausgestaltungsmöglichkeit einer hydraulischen Betätigungsanordnung für ein Fahrzeugverdeck erfordert jedoch für die Realisierung einer Nothaltefunktion einen relativ großen apparativen und steuerungstechnischen Aufwand.

Es ist daher Aufgabe der vorliegenden Erfindung, eine hydraulische Betätigungsvorrichtung für eine Verdeckeinheit eines Fahrzeugs zu schaffen, welche hinsichtlich des erforderlichen baulichen und steuerungstechnischen Aufwandes bei zuverlässiger Gewährleistung einer Nothaltefunktion und automatischen Absteuerung unter jeweils vordefinierten Notfallkriterien weiter verbessert ist.

Diese Aufgabe wird mit einer hydraulischen Betätigungsvorrichtung für eine Verdeckeinheit eines Fahrzeugs gemäß den Merkmalen des Patentanspruches 1 gelöst.

Die Erfindung sieht somit eine hydraulische Betätigungsvorrichtung für eine Verdeckeinheit eines Fahrzeugs vor, mit mehreren hydraulisch beweglichen Verdeckelementen und mit einer Pumpe, welche über eine Hydraulikverbindung mit den Arbeitsräumen zumindest einer ersten und einer zweiten doppeltwirkenden Kolben-Zylinder-Anordnung verbunden ist. Dabei sind die Kolben-Zylinder-Anordnungen über eine hydraulisch sperrbare Notventilvorrichtung mit einem Druckentspannungsraum verbunden, und die Notventilvorrichtung ist mit der von der Pumpe zu der ersten Kolben-Zylinder-Anordnung führenden Hydraulikverbindung über wenigstens eine unmittelbar nach der Pumpe von dieser abzweigenden Steuerleitung derart wirkverbunden, dass die Notventilvorrichtung bei Druckbeaufschlagung durch diese wenigstens eine Steuerleitung eine Verbindung mit dem Druckentspannungsraum sperrt.

Erfindungsgemäß ist in der von der Pumpe zu der ersten Kolben-Zylinder-Anordnung führenden Hydraulikverbindung zwischen der Abzweigung der wenigstens einen zu der Notventilvorrichtung führenden Steuerleitung und der ersten Kolben-Zylinder-Anordnung eine hydraulisch gesteuerte Ventilvorrichtung angeordnet, welche die Hydraulikverbindung bei Förderung der Pumpe entsperrt und über eine Steuerleitung mit der an der zweiten Kolben-Zylinder-Anordnung anliegenden Druckbeaufschlagung derart gekoppelt ist, dass bei Nichtförderung der Pumpe die hydraulisch gesteuerte Ventilvorrichtung die Hydraulikverbindung
a) bei anliegendem Druck an der zweiten Kolben-zylinder-Anordnung infolge einer Beschaltung wenigstens einer ersten Schaltventilvorrichtung zumindest für einen vordefinierten Zeitraum sperrt und
b) bei Drucklosschaltung der zweiten Kolben-Zylinder-Anordnung entsperrt.

Die hydraulische Betätigungsvorrichtung nach der Erfindung, welche zum Antrieb von Verdeckeinheiten unterschiedlicher Arten von Verdecken, wie eines formstabilen oder textilen Vollverdecks eines oberhalb einer Fahrzeugbrüstung vollständig zu öffnenden Cabriolet-Fahrzeugs oder eines roll- und/ oder schiebbaren Daches eines teilweise zu öffnenden Fahrzeugs, geeignet ist, zeichnet sich in vorteilhafter Weise durch eine einfache steuerungstechnische Gestaltung aus.

So erlaubt die erfindungsgemäße Betätigungsvorrichtung die Realisierung einer Nothaltefunktion, bei der ein Stopp des Bewegungsablaufs der Verdeckeinheit mit einem Halten der Aktuatoren in ihrem druckbeaufschlagten Zustand zumindest für eine vorgegebene Zeit ermöglicht ist, und einer Notbedienfunktion, d. h. einer manuellen Betätigung der Verdeckeinheit nach einer Störung, z. B. einem Ausfall der elektrisch angetriebenen Pumpe und/oder elektrisch angetriebener Ventilvorrichtungen, durch eine automatische Absteuerung und Entspannung des Arbeitsmediums in den Kolben-Zylinder-Anordnungen, mit einer geringen Anzahl von Ventilen, welche kostengünstig zu gestalten und besonders einfach zu verschalten sind.

Die Erfindung ermöglicht es insbesondere, mit dem Einsatz einer hydraulisch gesteuerten Ventilvorrichtung, insbesondere von 2-Kolben-Absperrventilen, welche auch als Double Pilot Shuttle Valve bezeichnet werden, und deren Kopplung mit der an der zweiten Kolben-Zylinder-Anordnung anliegenden Druckbeaufschlagung mittels einer Steuerleitung auf herkömmlicherweise zwischen der Pumpe und der ersten Kolbenzylinder-Einheit angeordnete entsperrbare Rückschlagventile, welche in der Regel sehr kostenintensiv sind, zu verzichten.

Insgesamt betrachtet ist die erfindungsgemäße hydraulische Betätigungsvorrichtung kostengünstig, Bauraum und Bauteile sparend und gleichzeitig hinsichtlich einer Versorgung und Ansteuerung voneinander unabhängig zu betätigender Kolbenzylinder-Anordnungen flexibel und funktionell vielseitig.

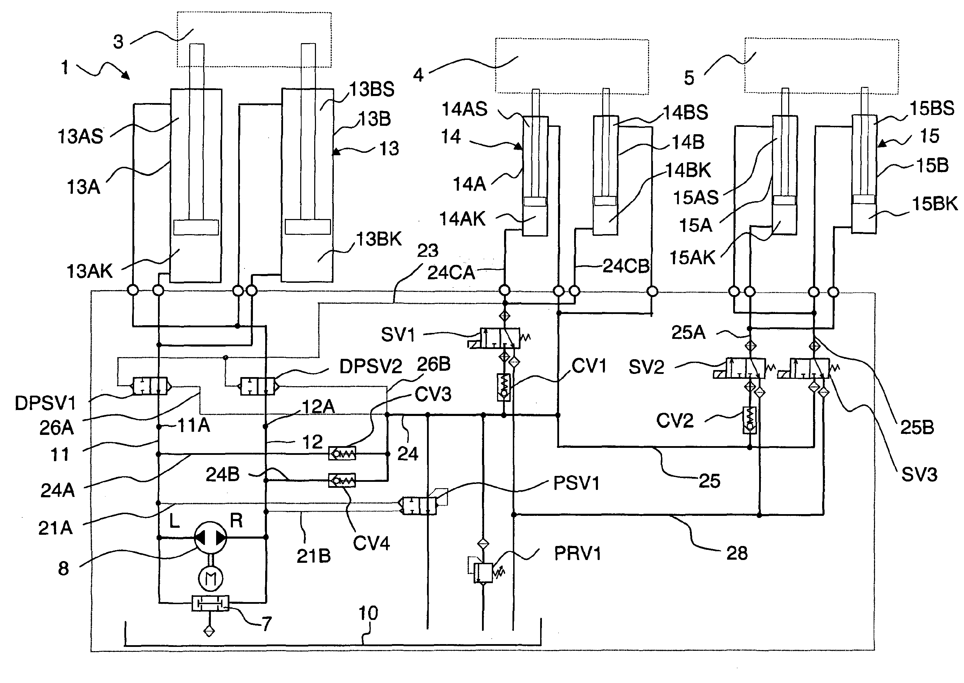

Weitere Vorteile und vorteilhafte Ausführungen einer erfindungsgemäß ausgestalteten hydraulischen Betätigungsvorrichtung für eine Verdeckeinheit eines Fahrzeugs, insbesondere eines Cabriolet-Fahrzeugs, ergeben sich aus der Zeichnung und der Beschreibung.

Nachfolgend ist ein vorteilhaftes Ausführungsbeispiel einer erfindungsgemäßen hydraulischen Betätigungsvorrichtung für Verdeckeinheiten eines Verdecks eines Cabriolet-Fahrzeugs anhand der Zeichnung prinzipmäßig beschrieben.

Die einzige Figur der Zeichnung zeigt dabei ein vereinfachtes hydraulisches Schaltbild einer erfindungsgemäßen hydraulischen Betätigungsvorrichtung mit mehreren zum Teil unabhängig voneinander arbeitenden Kolben-Zylinder-Anordnungen zum Antrieb verschiedener hydraulisch beweglicher Verdeckelemente, nämlich vorliegend eines Verdeckgestänges, eines Verdeckkastendeckels und eines Stoffhaltebügels.

Gemäß dem in der Figur gezeigten Ausführungsbeispiel weist eine hydraulische Betätigungsvorrichtung 1 zur Betätigung erster, ein Verdeckgestänge 3 darstellender Verdeckelemente einer Verdeckeinheit 2 eines Cabriolet-Fahrzeugs eine erste Kolben-Zylinder-Anordnung 13, sowie zur Betätigung zweiter, im Wesentlichen einen Verdeckkastendeckel 4 darstellender Verdeckelemente eine zweite Kolben-Zylinder-Anordnung 14 und zur Betätigung dritter, im Wesentlichen einen Spannbügel 5 darstellender Verdeckelemente eine dritte Kolben-Zylinder-Anordnung 15 auf, wobei die Zuordnung der Kolben-Zylinder-Anordnungen beispielhaft ist und in Ausführungsalternativen entsprechend variieren kann.

Dabei können die gezeigten Kolben-Zylinder-Anordnungen 13, 14, 15 auch anderen Verdeckelementen wie Gestängeklappen, Schließmechanismen zur Festlegung des Cabriolet-Verdecks an einem Windschutzscheibenrahmen bei geschlossenem Verdeckzustand und/oder zur Arretierung in einem geöffneten, heckseitig z. B. in einem Verdedeckablageraum abgelegten Zustand oder weiteren bei einem Verdeckschließvorgang oder Verdecköffnungsvorgang bewegten Verdeckelementen zugeordnet sein.

Die drei doppeltwirkenden hydraulischen Kolben-Zylinder-Anordnungen 13, 14, 15 weisen jeweils zwei Kolben-Zylinder-Einheiten 13A, 13B, 14A, 14B, 15A, 15B auf, von denen jeweils eine Kolben-Zylinder-Einheit einer linken oder rechten Fahrzeugsseite zugeordnet ist, und werden bei der gezeigten Ausführung von einer reversiblen Pumpe 8 vorliegend mit Hydrauliköl als hydraulisches Arbeitsmedium versorgt, wobei grundsätzlich auch die Verwendung einer nur in einer Richtung fördernden Pumpe bei einer entsprechenden Anpassung des Schaltplans im Rahmen der Erfindung denkbar ist.

Das in einem als Tank ausgebildeten Druckentspannungsraum 10 enthaltene Hydrauliköl wird von der Pumpe 8 über ein Wechselventil 7 angesaugt und über eine durch eine erste Hydraulikleitung 11 und eine zweite Hydraulikleitung 12 gebildete Hydraulikverbindung an die erste Kolben-Zylinder-Anordnung 13 geführt, wobei die elektromotorisch betriebene Pumpe 8 in einer ersten Drehrichtung L Hydrauliköl über die erste Hydraulikleitung 11 an kolbenseitige Arbeitsräume 13AK, 13BK der Kolben-Zylinder-Einheiten 13A, 13B führt und bei entgegengesetzter Drehrichtung R über die zweite Hydraulikleitung 12 das hydraulische Druckmittel an stangenseitige Arbeitsräume 13AS, 13BS der Kolben-Zylinder-Einheiten 13A, 13B fördert.

Über die Hydraulkleitungen 11, 12 kann das Hydrauliköl zur Druckentlastung der Arbeitsräume 13AK, 13BK, 13AS, 13BS der Kolben-Zylinder-Einheiten 13A, 13B auch wieder abgesteuert werden.

In den Hydraulikleitungen 11, 12 der die Pumpe 8 mit der ersten Kolben-Zylinder-Anordnung 13 verbindenden Hydraulikverbindung ist eine hydraulisch gesteuerte Ventilvorrichtung angeordnet, welche mit einem jeweils einer der Hydraulikleitungen 11, 12 zugeordneten Zwei-Kolben-Absperrventil DPSV1, DPSV2, auch Double Pilot Shuttle Valve genannt, ausgebildet ist.

Die Zwei-Kolben-Absperrventile DPSV1, DPSV2 gewährleisten bei Förderung der Pumpe 8 stets eine Druckversorgung der jeweiligen Arbeitsräume 13AK, 13BK, 13AS, 13BS der ersten Kolben-Zylinder-Anordnung 13 und sind bei Nicht-Förderung der Pumpe 8 gesteuert schließbar, so dass eine Nothaltefunktion bei Ausfall des Hydrauliksystems für die erste Kolben-Zylinder-Anordnung 13 über die Zwei-Kolben-Absperrventile DPSV1, DPSV2 realisiert ist.

Stromabwärts der Pumpe 8 zweigt von den die Pumpe 8 mit der Kolben-Zylinder-Anordnung 13 verbindenden Hydraulikleitungen 11, 12 jeweils eine Teilleitung 24A, 24B einer die Pumpe 8 mit der zweiten und dritten Kolben-Zylinder-Anordnung 14 bzw. 15 verbindenden Hydraulikleitung 24 ab, in denen jeweils eine in Richtung Pumpe 8 schließende Rückschlagventilvorrichtung CV3, CV4 angeordnet ist.

Um das Hydrauliksystem bei einer Störung oder einem Ausfall von Druckmittel entlasten zu können und somit eine manuelle Betätigung der ansonsten automatisch betätigten Verdeckelemente zu ermöglichen, ist eine hydraulisch sperrbare, mit dem Druckentspannungsraum 10 verbundene Notventilvorrichtung PSV1 vorgesehen. Deren hydraulische Ansteuerung erfolgt über Steuerleitungen 21A, 21B, welche unmittelbar stromabwärts der Pumpe 8 von den die Pumpe 8 mit den Kolben-Zylinder-Anordnungen 13, 14 und 15 verbindenden Hydraulikleitungen 11, 12 abzweigen, wobei die Notventilvorrichtung PSV1 bei Förderung der Pumpe 8 und somit Druckbeaufschlagung durch die Steuerleitungen 21A, 21B eine Verbindung mit dem Druckentspannungsraum 10 automatisch sperrt.

Die von der Pumpe 8 zunächst zu der zweiten Kolben-Zylinder-Anordnung 14 führende Hydraulikleitung 24 weist stromabwärts der Rückschlagventilvorrichtungen CV3, CV4 und von Verzweigungen zu der Notventilvorrichtung PSV1 und einem ebenfalls mit dem Druckentlastungsraum 10 verbundenen Druckbegrenzungsventil PRV1 eine Abzweigung in eine zu der dritten Kolbenzylinder-Anordnung 15 führende Zweigleitung 25 auf.

Die zweite Kolben-Zylinder-Anordnung 14 ist vorliegend differentiell arbeitend ausgebildet und weist ein eine erste Schaltventilvorrichtung bildendes Zwei-Positionen-Schaltventil SV1 auf, dem eine in Richtung Pumpe 8 schließende Rückschlagventilvorrichtung CV1 in seiner Abzweigung von der Hydraulikleitung 24 vorgeschaltet ist und welches Anschlüsse für an kolbenseitige Arbeitsräume 14AK, 14BK der zweiten Kolben-Zylinder-Anordnung 14 führende Leitungen 24CA, 24CB, die pumpenseitige Hydraulikleitung 24 und eine mit dem Druckentlastungsraum 10 verbundene Druckentlastungsleitung 28 aufweist.

Die dritte Kolben-Zylinder-Anordnung 15 ist bei der gezeigten Ausführung mit einer Direktschaltung arbeitend ausgebildet, wobei zur Direktschaltung der dritten Kolben-Zylinder-Anordnung 15 zwei Zwei-Positionen-Schaltventile SV2, SV3 vorgesehen sind, welche jeweils Anschlüsse für an kolbenseitige Arbeitsräume 15AK, 15BK oder stangenseitige Arbeitsräume 15AS, 15BS der dritten Kolben-Zylinder-Anordnung 15 führende Leitungen 25A und 25B, die pumpenseitige Zweigleitung 25 und die Druckentlastungsleitung 28 aufweisen.

Dem zu den kolbenseitigen Arbeitsräumen 15AK, 15BK der dritten Kolben-Zylinder-Anordnung 15 führenden Schaltventil SV2 ist wiederum eine in Richtung Pumpe 8 schließende Rückschlagventilvorrichtung CV2 vorgeschaltet.
Die Schaltung der Schaltventile SV1, SV2 und SV3 der zweiten und dritten Kolben-Zylinder-Anordnungen 14, 15 folgt dabei für eine Verdecköffnungsbewegung einer in folgender Tabelle Tab. 1 gezeigten Schaltlogik, während die Schaltung der Schaltventile SV1, SV2 und SV3 bei einer Verdeckschließbewegung nach der in Tabelle Tab. 2 gezeigten Schaltlogik erfolgt.

**Tab. 1**

| Bewegung | Drehrichtung der Pumpe | SV1 | SV2 | SV3 |
|---|---|---|---|---|
| Anheben des Stoffspannbügels | L | X | | |
| Verdeckkastendeckelöffnung | L | X | | X |
| Dachöffnung | R | | | x |
| Stoffhaltebügelrückführung | R | | X | X |
| Verdeckkastendeckelschließen | R | | | |

**Tab. 2**

| Bewegung | Drehrichtung der Pumpe | SV1 | SV2 | SV3 |
|---|---|---|---|---|
| Verdeckkastendeckelöffnung | R | | | X |
| Dachschließen | L | | | X |
| Anheben des Stoffspannbügels | L | X | | X |
| Verdeckkastendeckelschließen | L | X | | |
| Stoffhaltebügelabsenkung | L | | X | |

Eine Haltefunktion nach einem Abschalten bzw. einem Ausfall der Pumpe 8 wird vorliegend mit einer Schaltung der Schaltventile SV1, SV2 und SV3 während einer Verdecköffnungsbewegung gemäß der in Tabelle Tab. 3 gezeigten Schaltlogik und während einer Verdeckschließbewegung nach der in Tabelle Tab. 4 gezeigten Schaltlogik realisiert.

**Tab. 3**

| Bewegung | Drehrichtung der Pumpe | SV1 | SV2 | SV3 |
|---|---|---|---|---|
| Anheben des Stoffspannbügels | - | X | | |
| Verdeckkastendeckelöffnung | - | X | | X |
| Dachöffnung | - | | | X |
| Verdeckkastendeckelschließen | - | | | X |

**Tab. 4**

| Bewegung | Drehrichtung der Pumpe | SV1 | SV2 | SV3 |
|---|---|---|---|---|
| Verdeckkastendeckelöffnung | - | X | | |
| Dachschließen | - | | | X |
| Anheben des Stoffspannbügels | - | X | | X |
| Verdeckkastendeckelschließen | - | X | | X |
| Stoffhaltebügelabsenkung | - | X | | |

Die Haltefunktion wird des Weiteren dadurch ermöglicht, dass die der ersten Kolben-Zylinder-Anordnung 13 zugeordneten hydraulisch gesteuerten Ventilvorrichtungen DPSV1, DPSV2, welche bei Förderung der Pumpe 8 entsperrt sind, jeweils über eine Steuerleitung 23 mit der an der zweiten Kolben-Zylinder-Anordnung 14 anliegenden Druckbeaufschlagung derart gekoppelt sind, dass bei Nichtförderung der Pumpe 8 die hydraulisch gesteuerte Ventilvorrichtung DPSV1, DPSV2 die der Druckmittelzuführung und Absteuerung dienenden Hydraulikleitungen 11 und 12 der ersten Kolben-Zylinder-Anordnung 13 bei anliegendem Druck an der zweiten Kolben-Zylinder-Anordnung 14 infolge einer Beschaltung, d. h. einer aktiven Schaltung, der Schaltventilvorrichtung SV1 zumindest für einen vordefinierten Zeitraum von beispielsweise einigen Minuten sperrt und bei Drucklosschaltung der zweiten Kolben-Zylinder-Anordnung 14 entsperrt.

Die Zwei-Kolben-Absperrventile DPSV1, DPSV2, welche konstruktiv vorliegend mit zwei gegeneinander laufenden Steuerkolben ausgebildet sind und jeweils über eine zweite Steuerleitung 26A, 26B mit der zu der zweiten und dritten Kolben-Zylinder-Anordnung 14 bzw. 15 führenden Hydraulikleitung 24 verbunden sind, können alternativ zur Realisierung der Haltefunktion auch über eine der Steuerleitung 23 entsprechende Steuerleitung mit der Druckzuführung an die dritte Kolben-Zylinder-Anordnung 15 verbunden sein.

Eine weitere, hier nicht abgebildete Alternative, ist die Ansteuerung der hydraulisch gesteuerten Ventilvorrichtung DPSV1, DPSV2 über jeweils eine zweite Steuerleitung 26A, bzw. 26B. Die Steuerleitung 26A des Zwei-Kolben-Absperrventils DPSV1 ist mit der Hydraulikleitung 12, die zu der ersten Kolben-Zylinder-Anordnung 13 führt an einer Stelle 12A verbunden. Weiterhin ist die Steuerleitung 26B des Zwei-Kolben-Absperrventils DPSV2 mit der Hydraulikleitung 11, die zu der ersten Kolben-Zylinder-Anordnung 13 führt an einer Stelle 11A verbunden.

## Patentansprüche

1. Hydraulische Betätigungsvorrichtung für eine Verdeckeinheit (2) eines Fahrzeugs mit mehreren hydraulisch beweglichen Verdeckelementen (3, 4, 5), mit einer Pumpe (8), welche über eine Hydraulikverbindung (11, 12) mit den Arbeitsräumen (13AK, 13AS, 13BK, 13BS) zumindest einer ersten und einer zweiten doppeltwirkenden Kolben-Zylinder-Anordnung (13, 14, 15) verbunden ist, wobei eine Druckmittel aus Kolben-Zylinder-Anordnungen (14, 15) an einen Druckentspannungsraum (10) führende, hydraulisch sperrbare Notventilvorrichtung (PSV1) vorgesehen ist, welche mit der von der Pumpe (8) zu der ersten Kolben-Zylinder-Anordnung (13) führenden Hydraulikverbindung (11, 12) über wenigstens eine unmittelbar nach der Pumpe (8) von dieser abzweigenden Steuerleitung (21a, 21b) derart wirkverbunden ist, dass die Notventilvorrichtung (PSV1) bei Druckbeaufschlagung durch diese wenigstens eine Steuerleitung (21a, 21b) eine Verbindung mit dem Druckentspannungsraum (10) sperrt,
**dadurch gekennzeichnet,**
**dass** in der von der Pumpe (8) zu der ersten Kolben-Zylinder-Anordnung (13) führenden Hydraulikverbindung (11, 12) zwischen der Abzweigung der wenigstens einen zu der Notventilvorrichtung (PSV1) führenden Steuerleitung (21a, 21b) und der ersten Kolben-Zylinder-Anordnung (13) eine hydraulisch gesteuerte Ventilvorrichtung (DPSV1, DPSV2) angeordnet ist, welche die Hydraulikverbindung (11, 12) bei Förderung der Pumpe (8) entsperrt und über eine Steuerleitung (23) mit der an der zweiten Kolben-Zylinder-Anordnung (14) anliegenden Druckbeaufschlagung derart gekoppelt ist, dass bei Nichtförderung der Pumpe (8) die hydraulisch gesteuerte Ventilvorrichtung (DPSV1, DPSV2) die Hydraulikverbindung (11, 12)
a) bei anliegendem Druck an der zweiten Kolben-Zylinder-Anordnung (14) infolge einer Beschaltung wenigstens einer ersten Schaltventilvorrichtung (SV1) zumindest für einen vordefinierten Zeitraum sperrt und
b) bei Drucklosschaltung der zweiten Kolben-Zylinder-Anordnung (14) entsperrt.

2. Hydraulische Betätigungsvorrichtung nach Anspruch 1,
**dadurch gekennzeichnet,**
**dass** die Pumpe (8) reversibel ausgeführt ist und von beiden Seiten der reversiblen Pumpe (8) jeweils eine die Hydraulikverbindung zu der ersten Kolben-Zylinder-Anordnung (13) bildende Hydraulikleitung (11, 12) führt.

3. Hydraulische Betätigungsvorrichtung nach Anspruch 1 oder 2,
**dadurch gekennzeichnet,**
**dass** eine von der Pumpe (8) zu der wenigstens zweiten und ggf. einer weiteren Kolben-Zylinder-Anordnung (14, 15) führende Hydraulikleitung (24) von der Hydraulikver-bindung (11, 12) zu der ersten Kolben-Zylinder-Anordnung (13) zwischen der Abzweigung der wenigstens einen zu der Notventilvorrichtung (PSV1) führenden Steuerleitung (21A, 21B) und der hydraulisch gesteuerten Ventilvorrichtung (DPSV1, DPSV2) abzweigt.

4. Hydraulische Betätigungsvorrichtung nach einem der Ansprüche 1 bis 3,
**dadurch gekennzeichnet,**
**dass** die hydraulisch gesteuerte Ventilvorrichtung (DPSV1, DPSV2) mit einem ggf. jeweils einer jeden Hydraulikleitung (11, 12) der die Pumpe (8) mit der ersten Kolben-Zylinder-Anordnung (13) verbindenden Hydraulikverbindung (11, 12) zugeordnetem 2-Kolben-Absperrventil (DPSV1, DPSV2) ausgebildet ist.

5. Hydraulische Betätigungsvorrichtung nach einem der Ansprüche 1 bis 4,
**dadurch gekennzeichnet,**
**dass** von jeder der vorzugsweise zwei von der Pumpe (8) zu der ersten Kolben-Zylinder-Anordnung (13) führenden Hydraulikleitungen (11, 12) jeweils eine Steuerleitung (21a, 21b) zu der Notventilvorrichtung (PSV1) führt.

6. Hydraulische Betätigungsvorrichtung nach einem der Ansprüche 3 bis 5,
**dadurch gekennzeichnet,**
**dass** die hydraulisch gesteuerte Ventilvorrichtung (DPSV1, DPSV2) über wenigstens eine zweite Steuerleitung (26A, 26B) mit der zu der wenigstens zweiten Kolben-Zylinder-Anordnung (14, 15) führenden Hydraulikleitung (24) verbunden ist.

7. Hydraulische Betätigungsvorrichtung nach einem der Ansprüche 3 bis 5,
**dadurch gekennzeichnet,**
**dass** die hydraulisch gesteuerte Ventilvorrichtung (DPSV1, DPSV2) über jeweils eine zweite Steuerleitung (26A, 26B) mit einer von der Pumpe (8) zu der ersten Kolben-Zylinder-Anordnung (13) führenden Hydraulikleitung (11, 12) verbunden ist, wobei die eine zweite Steuerleitung (26A) des einen Zwei-Kolben-Absperrventils (DPSV1) mit der Hydraulikleitung (12), die zu der ersten Kolben-Zylinder-Anordnung (13) führt, verbunden ist, wobei die andere zweite Steuerleitung (26B) des anderen Zwei-Kolben-Absperrventils (DPSV2) mit der Hydraulikleitung (11), die zu der ersten Kolben-Zylinder-Anordnung (13) führt, verbunden ist und wobei die jeweilige Steuerleitung (26A, 26B) mit der jeweiligen Hydraulikleitung (11, 12) jeweils in einem Bereich (11A, 12A) zwischen der Pumpe (8) und dem jeweiligen Zwei-Kolben-Absperrventil (DPSV1, DPSV2) verbunden ist.

8. Hydraulische Betätigungsvorrichtung nach einem der Ansprüche 3 bis 5,
**dadurch gekennzeichnet,**
**dass** in der zu der wenigstens zweiten Kolben-Zylinder-Anordnung (14, 15) führenden Hydraulikleitung (24A, 24B) zwischen deren Abzweigung von der die Pumpe (8) mit der ersten Kolben-Zylinder-Anordnung (13) verbindenden Hydraulikverbindung (11, 12) und einer Abzweigung zu der hydraulischen Notventilvorrichtung (PSV1) und hiermit zu dem Druckentspannungsraum (10) eine in Richtung Pumpe (8) schließende Rückschlagventilvorrichtung (CV3, CV4) angeordnet ist.

9. Hydraulische Betätigungsvorrichtung nach einem der Ansprüche 1 bis 8,
**dadurch gekennzeichnet,**
**dass** die zweite Kolben-Zylinder-Anordnung (14) differentiell arbeitend ausgebildet ist.

10. Hydraulische Betätigungsvorrichtung nach Anspruch 9,
**dadurch gekennzeichnet,**
**dass** der differentiell arbeitenden zweiten KolbenZylinder-Anordnung (14) ein Schaltventil (SV1) zugeordnet ist, welches Anschlüsse für an kolbenseitige Arbeitsräume (14AK, 14BK) der zweiten Kolben-Zylinder-Anordnung (14) führende Leitungen (24CA, 24CB), die pumpenseitige Hydraulikleitung (24) und eine Druckentlastungsleitung (28) aufweist.

11. Hydraulische Betätigungsvorrichtung nach Anspruch 10,
**dadurch gekennzeichnet,**
**dass** dem Schaltventil (SV1) der zweiten Kolben-Zylinder-Anordnung (14) eine in Richtung Pumpe (8) schließende Rückschlagventilvorrichtung (CV1) vorgeschaltet ist.

12. Hydraulische Betätigungsvorrichtung nach einem der Ansprüche 1 bis 11,
**dadurch gekennzeichnet,**
**dass** von einer zu der zweiten Kolben-Zylinder-Anordnung (14) führenden Hydraulikleitung (24) eine Zweigleitung (25) zu einer dritten Kolben-Zylinder-Anordnung (15) führt.

13. Hydraulische Betätigungsvorrichtung nach Anspruch 12,
**dadurch gekennzeichnet,**
**dass** die dritte Kolben-Zylinder-Anordnung (15) mit einer Direktschaltung arbeitend ausgebildet ist.

14. Hydraulische Betätigungsvorrichtung nach Anspruch 13,
**dadurch gekennzeichnet,**
**dass** zur Direktschaltung der dritten Kolben-Zylinder-Anordnung (15) zwei Schaltventile (SV2, SV3) vorgesehen sind, welche jeweils Anschlüsse für an kolbenseitige Arbeitsräume (15AK, 15BK) oder stangenseitige Arbeitsräume (15AS, 15BS) der dritten Kolben-Zylinder-Anordnung (15) führende Leitungen (25A, 25B), die pumpenseitige Zweigleitung (25) und eine Druckentlastungsleitung (28) aufweisen.

15. Hydraulische Betätigungsvorrichtung nach Anspruch 14,
**dadurch gekennzeichnet,**
**dass** dem zu den kolbenseitigen Arbeitsräumen (15AK, 15BK) der dritten Kolben-Zylinder-Anordnung (15) führenden Schaltventil (SV2) eine in Richtung Pumpe (8) schließende Rückschlagventilvorrichtung (CV2) vorgeschaltet ist.

16. Hydraulische Betätigungsvorrichtung nach einem der Ansprüche 1 bis 15,
**dadurch gekennzeichnet,**
**dass** die erste Kolben-Zylinder-Anordnung (13) als Verdeckelement ein Verdeckgestänge (3), die zweite Kolben-Zylinder-Anordnung (14) als Verdeckelement einen Verdeckkastendeckel (4) und die dritte Kolben-Zylinder-Anordnung (15) als Verdeckelement einen Spannbügel (5) oder einen Schließmechanismus antreibt.

## Claims

1. A hydraulic actuating device for a hood assembly (2) of a vehicle with a plurality of hydraulically movable hood elements (3, 4, 5), comprising a pump (8), which is connected to the working chambers (13AK, 13AS, 13BK, 13BS) of at least one first and one second double-acting piston/cylinder arrangement (13, 14, 15) via a hydraulic connection (11, 12), there being provided a hydraulically blockable emergency valve device (PSV1) which feeds pressurised medium from piston/cylinder arrangements (14, 15) to a pressure relief chamber (10), said emergency valve device (PSV1) being operatively connected to the hydraulic connection (11, 12), which leads from the pump (8) to the first piston/cylinder arrangement (13), via at least one control line (21a, 21b) branching off from the hydraulic connection (11, 12) immediately after the pump (8), in such a way that the emergency valve device (PSV1), upon being pressurized by said at least one control line (21a, 21b), blocks a connection to the pressure relief chamber (10), **characterised in that**,
in the hydraulic connection (11, 12) leading from the pump (8) to the first piston/cylinder arrangement (13), a hydraulically controlled valve device (DPSV1, DPSV2) is arranged between the branch-off of the at least one control line (21 a, 21 b) leading to the emergency valve device (PSV1) and the first piston/cylinder arrangement (13), which valve device (DPSV1, DPSV2) unblocks the hydraulic connection (11, 12) during conveyance by the pump (8) and is coupled, via a control line (23), to the pressure applied to the second piston/cylinder arrangement (14), in such a way that, when the pump (8) is not conveying, the hydraulically controlled valve device (DPSV1, DPSV2)
a) blocks the hydraulic connection (11, 12) at least for a predetermined period of time, when pressure is applied to the second piston/cylinder arrangement (14), as a result of the applying of at least one switch valve device (SV1), and
b) unblocks the hydraulic connection (11, 12) upon depressurization of the second piston/cylinder arrangement (14).

2. The hydraulic actuating device according to claim 1, **characterised in that** the pump (8) is reversible and **in that** one hydraulic line (11, 12) each, forming the respective hydraulic connection to the first piston/cylinder arrangement (13), extends from both sides of the reversible pump (8).

3. The hydraulic actuating device according to claim 1 or 2, **characterised in that** a hydraulic line (24), leading from the pump (8) to the at least second and possibly a further piston/cylinder arrangement (14, 15), branches off from the hydraulic connection (11, 12) to the first piston/cylinder arrangement (13) between the branch-off of the at least one control line (21A, 21 B), which leads to the emergency valve device (PSV1), and the hydraulically controlled valve device (DPSV1, DPSV2).

4. The hydraulic actuating device according to any one of claims 1 to 3, **characterised in that** the hydraulically controlled valve device (DPSV1, DPSV2) is provided with a double-piston shut-off valve (DPSV1, DPSV2), which may be associated with each respective hydraulic line (11, 12) of the hydraulic connection (11, 12) connecting the pump (8) to the first piston/cylinder arrangement(13).

5. The hydraulic actuating device according to any one of claims 1 to 4, **characterised in that** one respective control line (21 a, 21 b) leads to the emergency valve device (PSV1) from each of the preferably two hydraulic lines (11, 12) leading from the pump (8) to the first piston/cylinder arrangement (13).

6. The hydraulic actuating device according to any one of claims 3 to 5, **characterised in that** the hydraulically controlled valve device (DPSV1, DPSV2) is connected via at least one second control line (26A, 26B) to the hydraulic line (24) leading to the at least second piston/cylinder arrangement (14, 15).

7. The hydraulic actuating device according to any one of claims 3 to 5, **characterised in that** the hydraulically controlled valve device (DPSV1, DPSV2) is connected, via one respective second control line (26A, 26B), to a hydraulic line (11, 12) leading from the pump (8) to the first piston/cylinder arrangement (13), wherein one second control line (26A) of one double-piston shut-off valve (DPSV1) is connected to the hydraulic line (12) leading to the first piston/cylinder arrangement (13), the other second control line (26B) of the other double-piston shut-off valve (DPSV2) is connected to the hydraulic line (11) leading to the first piston/cylinder arrangement (13), and the respective control line (26A, 26B) is connected to the respective hydraulic line (11, 12) in a respective area (11A, 12A) between the pump (8) and the respective double-piston shut-off valve (DPSV1, DPSV2).

8. The hydraulic actuating device according to any one of claims 3 to 5, **characterised in that** a non-return valve device (CV3, CV4) closing in direction of the pump (8) is arranged in the hydraulic line (24A, 24B) leading to the at least second piston/cylinder arrangement (14, 15), said non-return valve device (CV3, CV4) being arranged between the branch-off of the hydraulic line (24A, 24B) from the hydraulic connection (11, 12) connecting the pump (8) to the first piston/cylinder arrangement (13) and a branch-off to the hydraulic emergency valve device (PSV1), and thus to the pressure relief chamber (10).

9. The hydraulic actuating device according to any one of claims 1 to 8, **characterised in that** the second piston/cylinder arrangement (14) is provided to operate differentially.

10. The hydraulic actuating device according to claim 9, **characterised in that** a switch valve (SV1) is associated with the differentially operating second piston/cylinder arrangement (14), said switch valve (SV1) comprising ports for lines (24CA, 24CB) leading to piston-side working chambers (14AK, 14BK) of the second piston/cylinder arrangement (14), the pump-side hydraulic line (24), and a pressure relief line (28).

11. The hydraulic actuating device according to claim 10, **characterised in that** a non-return valve device (CV1) closing in direction of the pump (8) is arranged upstream of the switch valve (SV1) of the second piston/cylinder arrangement (14).

12. The hydraulic actuating device according to any one of claims 1 to 11, **characterised in that** a branch line (25) leads to a third piston/cylinder arrangement (15) from a hydraulic line (24) leading to the second piston/cylinder arrangement (14).

13. The hydraulic actuating device according to claim 12, **characterised in that** the third piston/cylinder arrangement (15) is provided to operate in a direct switching mode.

14. The hydraulic actuating device according to claim 13, **characterised in that** two switch valves (SV2, SV3) are provided for direct switching of the third piston/cylinder arrangement (15), each of said switch valves (SV2, SV3) comprising ports for lines (25A, 25B) leading to piston-side working chambers (15AK, 15BK) or rod-side working chambers (15AS, 15BS) of the third piston/cylinder arrangement (15), and further comprising the pump-side branch line (25) and a pressure relief line (28).

15. The hydraulic actuating device according to claim 14, **characterised in that** a non-return valve device (CV2) closing in direction of the pump (8) is arranged upstream of the switch valve (SV2) leading to the piston-side working chambers (15AK, 15BK) of the third piston/cylinder arrangement (15).

16. The hydraulic actuating device according to any one of claims 1 to 15, **characterised in that** the first piston/cylinder arrangement (13) constitutes a hood element driving a hood linkage (3), the second piston/cylinder arrangement (14) constitutes a hood element driving a hood compartment cover (4), and the third piston/cylinder arrangement (15) constitutes a hood element driving a tension bracket (5) or a closing mechanism.

## Revendications

1. Dispositif d'actionnement hydraulique pour un ensemble de capote (2) d'un véhicule présentant plusieurs éléments de capote (3, 4, 5) qui sont déplaçables de manière hydraulique, ledit dispositif comprenant une pompe (8), qui est reliée aux espaces de travail (13AK, 13AS, 13BK, 13BS) d'au moins un premier et deuxième ensembles piston-vérin à double effet (13, 14, 15) par une liaison hydraulique (11, 12), il y avant un dispositif à soupape de secours (PSV1) qui est blocable de manière hydraulique et qui amène du médium sous pression à un espace de détente de pression (10) à partir d'ensembles piston-vérin (14, 15), ledit dispositif à soupape de secours (PSV1) étant en liaison active avec la liaison hydraulique (11, 12), qui s'étend de la pompe (8) jusqu'au premier ensemble piston-vérin (13), au moyen d'au moins une conduite de commande (21a, 21b) bifurquant de la liaison hydraulique (11, 12) immédiatement après la pompe (8), de sorte que le dispositif à soupape de secours (PSV1), mis sous pression par cette au moins une conduite de commande (21 a, 21b), bloque une liaison avec l'espace de détente de pression (10),
**caractérisé en ce que**
la liaison hydraulique (11, 12) s'étendant de la pompe (8) jusqu'au premier ensemble piston-vérin (13) présente un dispositif à soupape (DPSV1, DPSV2), commandé de manière hydraulique, qui est disposé entre le branchement de ladite au moins une conduite de commande (21a, 21b), qui mène au dispositif à soupape de secours (PSV1), et le premier ensemble piston-vérin (13), ledit dispositif à soupape (DPSV1, DPSV2) debloquant la liaison hydraulique (11, 12) pendant le refoulement effectué par la pompe (8) et étant couplé, par une conduite de commande (23), à la pression agissant sur le deuxième ensemble piston-vérin (14), de manière à ce que, lors de l'absence du refoulement effectué par la pompe (8), le dispositif à soupape (DPSV1, DPSV2) commandé de manière hydraulique
a) bloque la liaison hydraulique (11, 12) au moins pendant une durée prédéfinie lors d'une mise sous pression du deuxième ensemble piston-vérin (14), à cause du fonctionnant d'au moins un dispositif à soupape de commande (SV1), et
b) débloque la liaison hydraulique (11, 12) lors d'une dépressurisation du deuxième ensemble piston-vérin (14).

2. Dispositif d'actionnement hydraulique selon la revendication 1, **caractérisé en ce que** la pompe (8) est réalisée de manière réversible et **en ce que** une conduite hydraulique (11, 12) respective, constituant la liaison hydraulique avec le premier ensemble piston-vérin (13), s'étend à partir de chaque côté de la pompe réversible (8).

3. Dispositif d'actionnement hydraulique selon la revendication 1 ou 2, **caractérisé en ce qu'**une conduite hydraulique (24), s'étendant de la pompe (8) audit au moins deuxième ensemble piston-vérin (14, 15) et éventuellement à un ensemble piston-vérin additionnel, bifurque de la liaison hydraulique (11, 12) avec le premier ensemble piston-vérin (13) entre le branchement de ladite au moins une conduite de commande (21A, 21 B) menant au dispositif à soupape de secours (PSV1), et le dispositif à soupape (DPSV1, DPSV2) commandé de manière hydraulique.

4. Dispositif d'actionnement hydraulique selon l'une quelconque des revendications 1 à 3, **caractérisé en ce que** le dispositif à soupape (DPSV1, DPSV2) commandé de manière hydraulique présente une soupape d'arrêt à deux pistons (DPSV1, DPSV2), qui peut être associée avec chaque conduite hydraulique (11, 12) respective de la liaison hydraulique (11, 12) reliant la pompe (8) au premier ensemble piston-vérin (13).

5. Dispositif d'actionnement hydraulique selon l'une quelconque des revendications 1 à 4, **caractérisé en ce qu'**une conduite de commande (21a, 21b) respective mène au dispositif à soupape de secours (PSV1) à partir de chacune des préférentiellement deux conduites hydrauliques (11, 12) qui s'étendent de la pompe (8) jusqu'au premier ensemble piston-vérin (13).

6. Dispositif d'actionnement hydraulique selon l'une quelconque des revendications 3 à 5, **caractérisé en ce que** le dispositif à soupape (DPSV1, DPSV2) commandé de manière hydraulique est relié, par au moins une deuxième conduite de commande (26A, 26B), à la conduite hydraulique (24) qui mène audit au moins deuxième ensemble piston-vérin (14, 15).

7. Dispositif d'actionnement hydraulique selon l'une quelconque des revendications 3 à 5, **caractérisé en ce que** le dispositif à soupape (DPSV1, DPSV2) commandé de manière hydraulique est relié, par une deuxième conduite de commande (26A, 26B) respective, à une conduite hydraulique (11, 12) qui s'étend de la pompe (8) jusqu'au premier ensemble piston-vérin (13), une des deuxièmes conduites de commande (26A) d'une des soupapes d'arrêt à deux pistons (DPSV1) étant reliée à la conduite hydraulique (12) qui mène audit premier ensemble piston-vérin (13), l'autre deuxième conduite de commande (26B) de l'autre soupape d'arrêt à deux pistons (DPSV2) étant reliée à la conduite hydraulique (11) qui mène audit premier ensemble piston-vérin (13), et la conduite de commande (26A, 26B) respective étant reliée à la conduite hydraulique (11, 12) respective dans une région respective (11A, 12A) entre la pompe (8) et la soupape d'arrêt à deux pistons (DPSV1, DPSV2) respective.

8. Dispositif d'actionnement hydraulique selon l'une quelconque des revendications 3 à 5, **caractérisé en ce qu'**un dispositif à soupape de retenue (CV3, CV4) se fermant vers la pompe (8) est disposé dans la conduite hydraulique (24A, 24B) qui mène audit au moins deuxième ensemble piston-vérin (14, 15), ledit dispositif à soupape de retenue (CV3, CV4) étant disposé entre le branchement de la conduite hydraulique (24A, 24B) bifurquant de la liaison hydraulique (11, 12) qui relie la pompe (8) audit premier ensemble piston-vérin (13), et un branchement vers le dispositif hydraulique à soupape de secours (PSV1), et puis à l'espace de détente de pression (10).

9. Dispositif d'actionnement hydraulique selon l'une quelconque des revendications 1 à 8, **caractérisé en ce que** le deuxième ensemble piston-vérin (14) est réalisé de à opération différentielle.

10. Dispositif d'actionnement hydraulique selon la revendication 9, **caractérisé en ce qu'**une soupape de commande (SV1) est associée avec le deuxième ensemble piston-vérin (14) à opération différentielle, ladite soupape de commande (SV1) comprenant des raccordements respectives pour des conduites (24CA, 24CB) qui mènent à des espaces de travail (14AK, 14BK) côté piston du deuxième ensemble piston-vérin (14), et comprenant en plus la conduite hydraulique (24) côté pompe et une conduite de détente de pression (28).

11. Dispositif d'actionnement hydraulique selon la revendication 10, **caractérisé en ce qu'**un dispositif à soupape de retenue (CV1) se fermant vers la pompe (8) est disposé en amont de la soupape de commande (SV1) du deuxième ensemble piston-vérin (14).

12. Dispositif d'actionnement hydraulique selon l'une quelconque des revendications 1 à 11, **caractérisé en ce qu'**une conduite dérivée (25) mène à un troisième ensemble piston-vérin (15) à partir d'une conduite hydraulique (24) qui mène au deuxième ensemble piston-vérin (14).

13. Dispositif d'actionnement hydraulique selon la revendication 12, **caractérisé en ce que** le troisième ensemble piston-vérin (15) est réalisé de manière à opérer à commande directe.

14. Dispositif d'actionnement hydraulique selon la revendication 13, **caractérisé en ce que** l'on prévoit deux soupapes de commande (SV2, SV3) pour la commande directe du troisième ensemble piston-vérin (15), chacune desdites soupapes de commande (SV2, SV3) comprenant des raccordements pour des conduites (25A, 25B) menant à des espaces de travail (15AK, 15BK) côté piston ou à des espaces de travail (15AS, 15BS) côté barre du troisième ensemble piston-vérin (15), et comprenant en plus la conduite dérivée (25) côté pompe et une conduite de détente de pression (28).

15. Dispositif d'actionnement hydraulique selon la revendication 14, **caractérisé en ce qu'**un dispositif à soupape de retenue (CV2) se fermant vers la pompe (8) est disposé en amont de la soupape de commande (SV2) qui mène aux espaces de travail (15AK, 15BK) côté piston du troisième ensemble piston-vérin (15).

16. Dispositif d'actionnement hydraulique selon l'une quelconque des revendications 1 à 15, **caractérisé en ce que** le premier ensemble piston-vérin (13) constitue un élément de capote entraînant une tringlerie de capote (3), le deuxième ensemble piston-vérin (14) constitue un élément de capote entraînant un couvercle du compartiment de capote (4), et le troisième ensemble piston-vérin (15) constitue un élément de capote entraînant un étrier de tension (5) ou un mécanisme de fermeture.
